# EUROPÄISCHE PATENTSCHRIFT

(11) **EP 2 102 464 B1**
(45) Veröffentlichungstag und Bekanntmachung des Hinweises auf die Patenterteilung: **28.07.2010**
(21) Anmeldenummer: 07821652.0
(22) Anmeldetag: 22.10.2007
(51) Int. Cl.: F01N 3/20, F16L 53/00

(54) **VORRICHTUNG ZUM BEFÖRDERN FLUIDER MEDIEN BEI TIEFEN TEMPERATUREN**
METHOD FOR TRANSPORTING FLUID MEDIA AT LOW TEMPERATURES
DISPOSITIF POUR ACHEMINER DES AGENTS FLUIDES À BASSES TEMPÉRATURES

(30) Priorität: 20.12.2006 DE 102006060314
(43) Veröffentlichungstag der Anmeldung: 23.09.2009
(73) Patentinhaber: Robert Bosch GmbH, 70442 Stuttgart (DE)
(72) Erfinder: HAEBERER, Rainer, 75015 Bretten (DE); HORN, Matthias, 71691 Freiberg (DE)
(86) Internationale Anmeldenummer: PCT/EP2007/061288
(87) Internationale Veröffentlichungsnummer: WO 2008/074543

(56) Entgegenhaltungen:
- EP-A- 1 818 588
- DE-A1-102004 026 866
- DE-B3-102004 062 603
- GB-A- 2 423 686

## Beschreibung

### Stand der Technik

Die Erfindung betrifft eine Vorrichtung zum Befördern fluider Medien, welche insbesondere auch bei tiefen Temperaturen, das heißt Temperaturen auch unterhalb des Festpunkts der fluiden Medien, geeignet ist. Derartige Vorrichtungen werden insbesondere im Rahmen von Systemen zum Dosieren flüssiger Reduktionsmittel in Abgassysteme von Kraftfahrzeugen zur Reduzierung von Schadstoffen im Abgas eingesetzt.

Bei Verbrennungskraftmaschinen, insbesondere bei dieselbetriebenen Verbrennungskraftmaschinen, muss aufgrund der in den nächsten Jahren anstehenden verschärften Abgasgesetzgebung unter anderem der Anteil an Stickoxiden im Abgas reduziert werden. Zur Reduzierung des Stickoxid-Anteils im Abgas wird zum Beispiel eine selektive katalytische Reduktion (SCR) durchgeführt, bei welcher die Stickoxide mit Hilfe von Reduktionsmitteln zu Stickstoff und Wasser reduziert werden. Als Reduktionsmittel wird zum Beispiel eine wässrige Harnstofflösung eingesetzt.

Das Reduktionsmittel wird üblicherweise in einem Tank gelagert und über eine Leitung vom Tank zu einem Dosiermodul befördert, mit dem das Reduktionsmittel zum Beispiel in das Abgasrohr eingespritzt wird. Ein Beispiel einer derartigen Vorrichtung ist in DE 10 2004 062 603 B3 dargestellt.

Anstelle des in DE 10 2004 062 603 B3 dargestellten Systems, bei welchem das Reduktionsmittel unter Zugabe von Druckluft in den Katalysator eingebracht wird, werden häufig auch einfachere Systeme eingesetzt, bei welchen das flüssige Reduktionsmittel aus einem Tank (welcher beispielsweise beheizt ausgestaltet sein kann) über ein Fördermodul und entsprechende Leitungen zum Dosiermodul gefördert wird, um dort in das Abgas eingespritzt zu werden.

Die heute üblichen flüssigen Reduktionsmittel (beispielsweise die bereits genannte wässrige Harnstofflösung) gefrieren jedoch je nach (optional) zugesetztem Anti-Frostmittel zwischen ca. -1 °C und -40 °C. Somit ist das beschriebene System häufig bei bestimmten Umgebungsbedingungen nicht unmittelbar verfügbar. Daher werden üblicherweise spezielle Heizmaßnahmen vorgesehen, um das Reduktionsmittel im System in den flüssigen Zustand zu überführen. Neben dem Tank werden daher häufig auch das Fördermodul und/oder die verwendeten Leitungen ganz oder teilweise beheizt ausgestaltet. Mit diesen Maßnahmen ist in der Regel gewährleistet, dass das System nach einer vorgegebenen Zeit betriebsbereit ist.

Trotz der genannten Heizmaßnahmen besteht jedoch eine häufig auftretende Problematik darin, dass die Schnittstelle zwischen einzelnen Systemkomponenten, insbesondere den Komponenten Tank, Fördermodul und Leitung beziehungsweise Leitungsabschnitten, aufgrund der vorgegebenen Beschaffenheit der Heizung nur schlecht aufgetaut werden kann. Selbst wenn die einzelnen Systemkomponenten selbst aufgetaut sind, sind in vielen Fällen die Schnittstellen noch eingefroren, was die Verfügbarkeit des Systems vermindert oder sogar verhindert. Dies beruht insbesondere darauf, dass die elektrische Heizung nur mit großem Aufwand an die Schnittstelle herangeführt werden kann.

In vielen Fällen werden für die Schnittstellen hydraulische Anschlussstücke benötigt. Die Beheizung dieser hydraulischen Anschlussstücke, welche in der Regel nicht Bestandteil des beziehungsweise der Heizkreise der Systemkomponenten sind, hat sich als überaus schwierig erwiesen.

### Offenbarung der Erfindung

Erfindungsgemäß wird daher eine Vorrichtung zum Befördern eines fluiden Mediums vorgeschlagen, welche aus dem Stand der Technik bekannte Vorrichtungen vorteilhaft weiterbildet und die oben beschriebene Schnittstellenproblematik vermeidet. Die fluiden Medien können dabei unterschiedlicher Natur sein, also insbesondere gasförmiger oder flüssiger Natur, wobei vorzugsweise die Vorrichtung auf die Beförderung eines oder mehrerer flüssiger Reduktionsmittel zur Verminderung der Schadstoffemission in einem Kraftfahrzeug eingerichtet ist.

Die vorgeschlagene Vorrichtung stellt eine Schnittstelle zwischen einer beheizten Förderleitung und einer Systemkomponente bereit, welche auch als hydraulische Schnittstelle beziehungsweise hydraulisches Anschlussstück ausgebildet sein kann. Die Systemkomponente kann insbesondere ein Fördermodul oder einen Arbeitsbehälter oder auch eine weitere Förderleitung umfassen. Auch ein Anschluss an andere Arten von Systemkomponenten eines Fördersystems zur Beförderung fluider Medien ist jedoch denkbar, wie beispielsweise an Verteiler oder ähnliches, sowie einen Anschluss an eine Kombination derartiger Systemkomponenten.

Die Schnittstelle ist innerhalb kürzester Zeit durch entsprechende Heizmaßnahmen auftaubar, ohne dass aufwändige Heizmaßnahmen in der Schnittstelle selbst vorgesehen sein müssen. Analog kann durch geringe Heizleistungen ein Einfrieren der Schnittstelle verhindert werden. Die Verfügbarkeit der Vorrichtung wird durch die erfindungsgemäße Ausgestaltung stark erhöht. Wartezeiten, die mit einem Auftauen der Schnittstelle verbunden sind, werden erheblich verkürzt, was die Einsatzfähigkeit insbesondere im Automobilbereich sowie die Benutzerfreundlichkeit erhöht.

Ein Gedanke der Erfindung besteht dabei darin, die fluidische Kopplung zwischen Förderleitung und Systemkomponente (das heißt insbesondere eine sichere mechanische Kopplung, möglichst in Verbindung mit einer hohen Dichtigkeit gegenüber dem fluiden Medium) zu trennen von der thermischen Funktionalität. Dementsprechend weist die Vorrichtung neben einem Förderleitungs-seitigen Leitungsanschlussstück und einem mit diesem gekoppelten Systemkomponenten-seitigen Modulanschlussstück (welche gemeinsam die Schnittstelle bilden und die Funktionalität der mechanischen/fluidischen Kopplung bereitstellen) eine Wärmeleithülse auf, welche Wärme von der beheizten Förderleitung und/oder einem beheizten Innenbereich der Systemkomponente auf die Schnittstelle überträgt.

Durch diese Wärmeübertragung mittels der Wärmeleithülse kann auf eine eigenständige Beheizung der Schnittstelle verzichtet werden beziehungsweise der Aufwand für eine derartige Beheizung kann stark vermindert werden. Die Schnittstelle kann somit einfach und kostengünstig aufgebaut sein.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: ein Ausführungsbeispiel eines erfindungsgemäßen Systems zum Dosieren eines flüssigen Reduktionsmittels in ein Abgassystem; und
- Figur 2: ein Ausführungsbeispiel einer Vorrichtung zum Befördern eines fluiden Medi- ums.

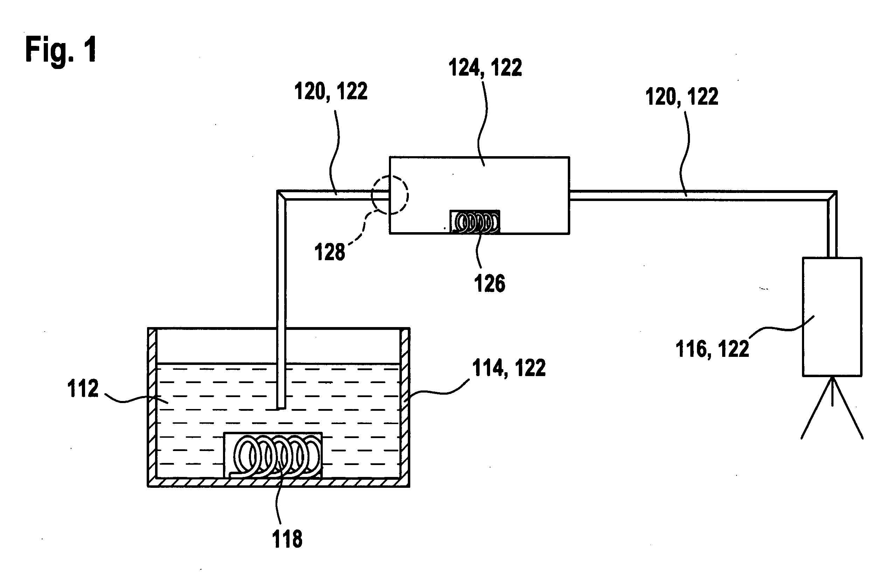

In Figur 1 ist in schematischer Darstellung ein Ausführungsbeispiel eines Systems 110 zum Dosieren eines flüssigen Reduktionsmittels 112 aus einem Arbeitsbehälter 114 über ein Dosiermodul 116 in den Abgastrakt einer Verbrennungskraftmaschine (insbesondere im Bereich eines Katalysators) dargestellt. Das Dosiermodul 116 kann dabei beispielsweise wie im eingangs genannten Stand der Technik ausgestaltet sein, beispielsweise als druckgesteuertes Einspritzventil.

Der Arbeitsbehälter 114 ist im hier dargestellten System 110 mit einer Behälterheizung 118 versehen, mittels derer das flüssige Reduktionsmittel 112 auf eine Arbeitstemperatur gebracht werden kann und/oder mittels derer ein Einfrieren des flüssigen Reduktionsmittels 112 im Arbeitsbehälter 114 verhindert werden kann.

Problematisch an derartigen Systemen 110, wie sie beispielhaft in Figur 1 dargestellt sind, sind jeweils, wie oben beschrieben, unvermeidliche Schnittstellen zwischen Förderleitungen 120 und weiteren Systemkomponenten 122. Unter "Systemkomponente" sind dabei insbesondere Komponenten zu verstehen, welche für die Aufnahme und/oder Beförderung des flüssigen Reduktionsmittels 112 (beziehungsweise sinngemäß anderer fluider Medien) geeignet sind, also entsprechende Hohlräume und/oder Leitungen aufweisen. Dementsprechend kommen als Systemkomponenten 122 beispielsweise der Arbeitsbehälter 114, das Dosiermodul 116, die Förderleitungen 120 selbst (zum Beispiel im Rahmen einer Kopplung zweier verschiedener Leitungen) oder auch ein Fördermodul 124 in Betracht, an welche im Rahmen einer Montage des Systems 110 eine Förderleitung 120 anzuschließen ist.

Das Fördermodul 124 kann beispielsweise eine Pumpe (beispielsweise eine Membranpumpe) und vorzugsweise ein Heizelement 126 zum Auftauen des flüssigen Reduktionsmittels 112 beziehungsweise zum Erhalten einer Betriebstemperatur aufweisen. Auch die Förderleitungen 120 sind entsprechend beheizt ausgebildet.

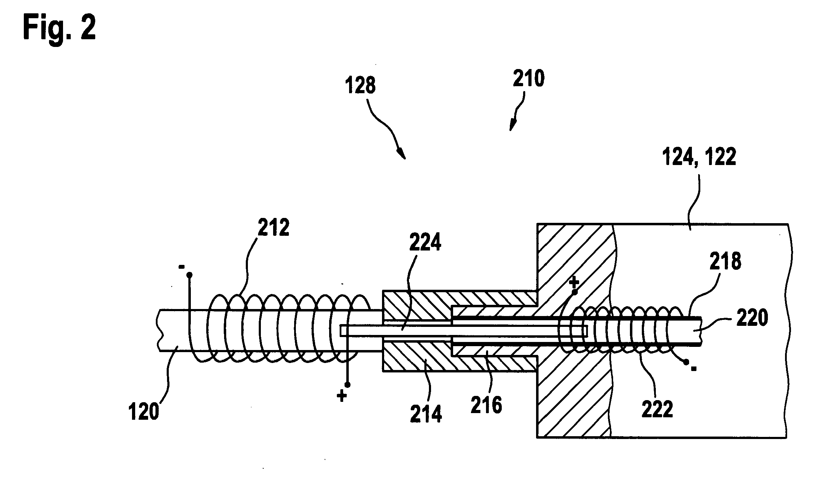

In Figur 2 ist eine erfindungsgemäße Vorrichtung 210 zum Befördern eines fluiden Mediums dargestellt. Im Folgenden sei angenommen, dass diese Vorrichtung eine Schnittstelle zwischen einer Förderleitung 120 und dem Fördermodul 124 umfasst, welche in Figur 1 symbolisch mit der Bezugsziffer 128 bezeichnet wurde. Wie oben beschrieben, kommen jedoch auch andere Schnittstellen in Betracht, beispielsweise Schnittstellen der Förderleitungen 120 mit dem Arbeitsbehälter 114, weiteren Förderleitungen 120 oder dem Dosiermodul 116.

In der Vorrichtung 210 gemäß der Darstellung in Figur 2 weist die Förderleitung 120 eine Leitungsheizung 212 auf, welche in Figur 2 symbolisch als Heizwicklung dargestellt ist. Auch andere Ausgestaltungen der Leitungsheizung sind selbstverständlich denkbar. Die Förderleitung 120 selbst kann beispielsweise aus einem Kunststoffmaterial, beispielsweise einem herkömmlichen oder auch einem thermisch leitfähigen Kunststoffmaterial (zum Beispiel einem mit einem thermisch leitfähigen Füllstoff gefüllten Kunststoff), hergestellt sein, oder beispielsweise auch aus einem metallischen Material.

Am Ende der Förderleitung 120 ist ein Leitungsanschlussstück 214 angeordnet, welches mit der Förderleitung 120 verbunden ist. Das Leitungsanschlussstück 214 wird von der Leitungsheizung 212 nicht erfasst und ist somit weitgehend unbeheizt. Das Leitungsanschlussstück 214 kann beispielsweise aus Kunststoff oder auch als Metall (beispielsweise aus Aluminium oder Messing) ausgebildet sein und stellt das weibliche Steckerteil der Schnittstelle 128 dar.

Als Pendant zum Leitungsanschlussstück 214 weist das Fördermodul 124 ein stutzenförmig am Gehäuse des Fördermoduls 124 angeordnetes Modulanschlussstück 216 auf. Dieses Modulanschlussstück 216 bildet den männlichen Teil der Schnittstelle 128 und ist entsprechend ausgeführt, um in das Ende des Leitungsanschlussstücks 214 eingefügt zu werden. Beispielsweise kann dieses Modulanschlussstück 216 wiederum aus Kunststoff oder einem metallischen Werkstoff ausgeführt sein.

In dem in Figur 2 dargestellten gekoppelten Zustand bilden somit das Modulanschlussstück 216 und das Leitungsanschlussstück 214 die hydraulische Schnittstelle, welche die mechanischen Funktionen der Schnittstelle 128 gewährleistet. Es können weitere, in den Figuren nicht dargestellte Elemente vorgesehen sein, um die mechanische Kopplung weiter zu verbessern, beispielsweise Gewinde, Überwurfmuttern oder Verbindungshaken zwischen dem Modulanschlussstück 216 und dem Leitungsanschlussstück 214.

Im Inneren des Fördermoduls 124, welches beispielsweise eine Pumpe umfassen kann, ist eine weitere Leitung 218 angeordnet, mit einem Innenbereich 220. Bei gekoppelter Schnittstelle 128 steht dieser Innenbereich 220 mit dem Innenraum der Förderleitung 120 fluidisch in Verbindung. Wird anstelle des Fördermoduls 124 als Systemkomponente 122 ein anderes fluidisches Element, wie beispielsweise der Arbeitsbehälter 114, verwendet, so tritt der Innenraum dieses Behälters an die Stelle des Innenbereichs 120.

Im Inneren des Fördermoduls 124 ist weiterhin eine Modulheizung 222 angeordnet, welche in der schematischen Darstellung gemäß Figur 2 als Heizwicklung ausgebildet ist. Auch andere Arten der Ausgestaltung dieser Modulheizung 222 sind jedoch denkbar, beispielsweise Heizwicklungen in Form von Heizdecken, in das fluide Medium eintauchende Heizungen oder ähnliches. Die Modulheizung 222 dient dazu, die Leitung 218 und deren Innenbereich 220 entsprechend mit Wärme zu beaufschlagen, um ein Einfrieren des fluiden Mediums zu verhindern beziehungsweise um dieses aufzutauen.

Wie in Figur 2 gezeigt, ist die eigentliche Schnittstelle 128, also insbesondere das Leitungsanschlussstück 214 und das Modulanschlussstück 216, hier unbeheizt ausgebildet. Die Schnittstelle 128 kann jedoch, ganz oder teilweise, mit einer in Figur 2 nicht dargestellten thermischen Isolierung, beispielsweise einer Ummantelung (zum Beispiel aus Stoffgewebe, Glasfaser oder ähnlichem), umgeben sein. Vorzugsweise hat diese thermische Ummantelung beziehungsweise das darin verwendete Material eine thermische Leitfähigkeit von weniger als 0,1 W/(m * K).

Um ein Einfrieren der Schnittstelle 128 zu verhindern, weist die Vorrichtung 210 eine Wärmeleithülse 224 auf, welche in die fluidische Verbindung zwischen der Förderleitung 120 und der Leitung 218 eingeschoben ist. In der Darstellung gemäß Figur 2 ist diese Wärmeleithülse 224 einstückig ausgebildet, wobei jedoch auch mehrteilige Ausgestaltungen der Wärmeleithülse 224 denkbar sind, beispielsweise in Form eines dem Leitungsanschlussstück 214 zugeordneten Hülsenteils und eines dem Modulanschlussstück 216 zugeordneten Hülsenteils.

Vorzugsweise wird hierbei eine zylindrische Wärmeleithülse 224 verwendet, welche selbst einen Innenhohlraum aufweist. Erfindungsgemäss stellt die Wärmeleithülse 224 eine fluidische Verbindung zwischen Förderleitung und Innenbereich 220 her. Alternativ könnte jedoch auch komplexere Strömungsgeometrien der Wärmeleithülse 224 eingesetzt werden.

Vorzugsweise wird als Material für die Wärmeleithülse 224 ein Material mit einer Wärmeleitfähigkeit von mehr als 100 W/(m * K) verwendet. Als besonders geeignet haben sich daher Metalle erwiesen, wie beispielsweise Kupfer, Aluminium, Messing, Zink, Silber, Gold, Magnesium oder Wolfram sowie Legierungen dieser Metalle. Diese Metalle können beispielsweise zum Schutz gegenüber dem flüssigen Reduktionsmittel 112 auch mit einer vorzugsweise dünnen (beispielsweise nicht mehr als 500 Mikrometer dicken) chemisch resistenten Schutzschicht (beispielsweise Teflon oder ein anderer Kunststoff oder eine mehrschichtige Kunststoffzusammensetzung) überzogen sein. Alternativ oder zusätzlich können auch Graphit oder thermisch leitfähige Kunststoffe, beispielsweise mit Graphit- oder Metallpartikeln gefüllte Kunststoffe, als Werkstoff für die Wärmeleithülse 224 eingesetzt werden.

Die Wärmeleithülse 224 steht mit mindestens einem der durch die Heizelemente 212 und 222 beheizten Bereiche thermisch in Kontakt, um Wärme aus diesen Bereichen auf die Schnittstelle 124 zu übertragen. Dieser thermische Kontakt kann sowohl in Form von Wärmeleitung als auch in Form von Wärmestrahlung ausgestaltet sein. Der Wärmeübertragungskoeffizient sollte dabei größer sein als für die Wärmeübertragung zwischen Förderleitung 12 und Leitungsanschlussstück 214 beziehungsweise Modulanschlussstück 216 und beheiztem Innenbereich 220.

Beispielsweise kann die Wärmeleithülse 224 als mit Presspassung in die Förderleitung 120 eingeschobene Röhre ausgebildet sein. Alternativ oder zusätzlich kann die Wärmeleithülse 224 auch in die Leitung 218 im Innenbereich 220 des Fördermoduls 124 eingeschoben sein. Auf diese Weise ist ein schnelles und sicheres Auftauen der Schnittstelle 128 gewährleistet, beziehungsweise ein Einfrieren dieser Schnittstelle 128 kann auf einfache Weise verhindert werden. Insbesondere wenn das System 110 als Dosiersystem bei der oben beschriebenen SCR eingesetzt wird, wobei innerhalb kürzester Zeit eine Betriebsbereitschaft hergestellt werden muss, macht sich diese Ausgestaltung der Schnittstelle 128 positiv bemerkbar.

Die Schnittstelle 128 ist also derart ausgebildet, dass die beiden Anschlussstücke 214, 216 die mechanische Funktion der Verbindung übernehmen, sowie, optional, eine fluidische Funktion (zum Beispiel im Rahmen einer hydraulischen Verbindung). Die Wärmeübertragung auf die Schnittstelle 128 beziehungsweise die Heizung derselben wird hingegen von der als separates Bauteil ausgebildeten Wärmeleithülse 224 übernommen, welche auch gleichzeitig fluidische Funktionen übernimmt.

Die Werkstoffe der Wärmeleithülse 224 beziehungsweise der Anschlussstücke 214, 216 können somit, entsprechend dieser getrennten Funktionalitäten, separat optimiert werden, entsprechend der jeweiligen Anforderungen.

Abschließend sei dabei noch bemerkt, dass die Kopplung der Schnittstelle 128 auch abweichend von der in Figur 2 dargestellten Kopplung mit einfachen zwei Anschlussstücken 214, 218 ausgestaltet sein kann, beispielsweise unter Verwendung eines Zwischenstücks (Adapter), also in Form einer indirekten Kopplung. In diesem Fall wird vorteilhafterweise die Wärmeleithülse 224 derart ausgestaltet sein, dass diese auch das Zwischenstück ganz oder teilweise durchdringt, um auch ein Einfrieren dieses Zwischenstücks zu verhindern beziehungsweise ein Auftauen dieses Zwischenstücks ohne Einsatz einer zusätzlichen Heizung im Zwischenstück zu ermöglichen.

## Patentansprüche

1. Vorrichtung (210) zum Befördern eines fluiden Mediums, insbesondere zum Dosieren eines flüssigen Reduktionsmittels (112) in ein Abgassystem zur Reduzierung von Schadstoffen in einem Abgas, aufweisend mindestens eine beheizte Förderleitung (120) und mindestens eine Systemkomponente (122) mit einem beheizten Innenbereich (220), wobei die Förderleitung (120) ein Leitungsanschlussstück (214) umfasst, wobei die Systemkomponente (122) ein mit dem Leitungsanschlussstück (214) direkt oder indirekt gekoppeltes, vorzugsweise trennbar gekoppeltes, Modulanschlussstück (216) umfasst, wobei die Vorrichtung (210) weiterhin mindestens eine in das Leitungsanschlussstück (214) und das Modulanschlussstück (216) einbringbare Wärmeleithülse (224) umfasst und **dadurch gekennzeichnet, dass** die Wärmeleithülse (224) zur Übertragung von Wärme thermisch mit der beheizten Förderleitung (120) und/oder dem beheizten Innenbereich (220) gekoppelt ist, wobei die Wärmeleithülse (224) eine fluidische Verbindung der Förderleitung (120) und des Innenbereichs (220) herstellt, und wobei die fluidische Verbindung eine Verbindung für das fluide Medium ist.

2. Vorrichtung (210) gemäß dem vorhergehenden Anspruch, **dadurch gekennzeichnet, dass** die Systemkomponente (122) mindestens eines der folgenden Elemente umfasst: ein Fördermodul (124); einen Arbeitsbehälter (114); eine weitere Förderleitung (120).

3. Vorrichtung (210) gemäß einem der vorhergehenden Ansprüche, **dadurch gekennzeichnet, dass** die Wärmeleithülse (224) eine zylindrische Hülse aufweist.

4. Vorrichtung (210) gemäß einem der vorhergehenden Ansprüche, **dadurch gekennzeichnet, dass** die Wärmeleithülse (224) mehrteilig ausgebildet ist.

5. Vorrichtung (210) gemäß einem der vorhergehenden Ansprüche, **dadurch gekennzeichnet, dass** die Wärmeleithülse (224) ein integraler Bestandteil mindestens eines der folgenden Elemente ist: des Leitungsanschlussstücks (214); des Modulanschlussstücks (216).

6. Vorrichtung (210) gemäß einem der vorhergehenden Ansprüche, **dadurch gekennzeichnet, dass** mindestens eines der folgenden Elemente ohne eigene Heizung ausgebildet ist: das Leitungsanschlussstück (214); das Modulanschlussstück (216).

7. Vorrichtung (210) gemäß einem der vorhergehenden Ansprüche, **dadurch gekennzeichnet, dass** das Leitungsanschlussstück (214) und/oder das Modulanschlussstück (216) ganz oder teilweise thermisch isoliert sind, insbesondere durch vollständige oder teilweise Ummantelung mit einem Isolationsmaterial, insbesondere aufweisend ein Material mit einer thermischen Leitfähigkeit von weniger als 0,1 W/(m * K), vorzugsweise von weniger als 0,06 W/(m * K).

8. Vorrichtung (210) gemäß einem der vorhergehenden Ansprüche, **dadurch gekennzeichnet, dass** die Wärmeleithülse (224) ein Material mit einer Wärmeleitfähigkeit von mehr als 100 W/(m * K) umfasst.

9. Vorrichtung (210) gemäß einem der vorhergehenden Ansprüche, **dadurch gekennzeichnet, dass** die Wärmeleithülse (224) mindestens eines der folgenden Materialien umfasst: ein Metall, insbesondere eines oder mehrere der Metalle Kupfer, Aluminium, Messing, Zink, Silber, Gold, Magnesium, Wolfram; Graphit; einen thermisch leitfähigen Kunststoff, insbesondere einen mit Graphit oder Metallpartikeln gefüllten Kunststoff.

10. System (110) zum Dosieren eines flüssigen Reduktionsmittels (112) in ein Abgassystem, insbesondere zur Reduzierung von Stickoxiden in einem Abgas, umfassend mindestens einen Arbeitsbehälter (114) zur Bevorratung einer Arbeitsmenge des flüssigen Reduktionsmittels (112), mindestens ein Dosiermodul (116) und mindestens eine Vorrichtung (210) gemäß einem der vorhergehenden Ansprüche.

## Claims

1. Device (210) for feeding a fluid medium, in particular for metering a liquid reducing agent (112) into an exhaust system for the reduction of pollutants in an exhaust gas, having at least one heated feed line (120) and at least one system component (122) having a heated inner region (220), with the feed line (120) comprising a line connecting piece (214), with the system component (122) comprising a module connecting piece (216) which is directly or indirectly coupled, preferably detachably coupled, to the line connecting piece (214), with the device (210) also comprising at least one heat-conducting sleeve (224) which can be inserted into the line connecting piece (214) and the module connecting piece (216), and **characterized in that** the heat-conducting sleeve (224) is thermally coupled, for the transmission of heat, to the heated feed line (120) and/or to the heated inner region (220), with the heat-conducting sleeve (224) producing a fluidic connection of the feed line (120) and the inner region (220), and with the fluidic connection being a connection for the fluid medium.

2. Device (210) according to the preceding claim, **characterized in that** the system component (122) comprises at least one of the following elements: a feed module (124); a working tank (114); a further feed line (120).

3. Device (210) according to one of the preceding claims, **characterized in that** the heat-conducting sleeve (224) has a cylindrical sleeve.

4. Device (210) according to one of the preceding claims, **characterized in that** the heat-conducting sleeve (224) is formed in a plurality of parts.

5. Device (210) according to one of the preceding claims, **characterized in that** the heat-conducting sleeve (224) is an integral constituent part of at least one of the following elements: of the line connecting piece (214); of the module connecting piece (216).

6. Device (210) according to one of the preceding claims, **characterized in that** at least one of the following elements is formed without its own heating arrangement: the line connecting piece (214); the module connecting piece (216).

7. Device (210) according to one of the preceding claims, **characterized in that** the line connecting piece (214) and/or the module connecting piece (216) are/is entirely or partially thermally insulated, in particular by means of complete or partial encasement with an insulating material, in particular having a material with a thermal conductivity of less than 0.1 W/(m * K), preferably of less than 0.06 W/(m * K).

8. Device (210) according to one of the preceding claims, **characterized in that** the heat-conducting sleeve (224) comprises a material with a thermal conductivity of greater than 100 W/(m * K).

9. Device (210) according to one of the preceding claims, **characterized in that** the heat-conducting sleeve (224) comprises at least one of the following materials: a metal, in particular one or more of the metals copper, aluminium, brass, zinc, silver, gold, magnesium, tungsten; graphite; a thermally conductive plastic, in particular a plastic filled with graphite or metal particles.

10. System (110) for metering a liquid reducing agent (112) into an exhaust system, in particular for the reduction of nitrogen oxides in an exhaust gas, comprising at least one working tank (114) for storing a working quantity of the liquid reducing agent (112), at least one metering module (116) and at least one device (210) according to one of the preceding claims.

## Revendications

1. Dispositif (210) pour acheminer un agent fluide, notamment pour doser un agent réducteur fluide (112) dans un système de gaz d'échappement pour réduire les substances toxiques dans un gaz d'échappement, présentant au moins une conduite de refoulement chauffée (120) et au moins un composant du système (122) avec une région interne chauffée (220), la conduite de refoulement (120) comprenant un raccord de conduite (214), le composant du système (122) comprenant un raccord modulaire (216) accouplé directement ou indirectement, de préférence accouplé de manière séparable, au raccord de conduite (214), le dispositif (210) comprenant en outre au moins une douille thermoconductrice (224) pouvant être introduite dans le raccord de conduite (214) et le raccord modulaire (216), et **caractérisé en ce que** la douille thermoconductrice (224) est accouplée thermiquement, en vue du transfert thermique, à la conduite de refoulement chauffée (120) et/ou à la région interne chauffée (220), la douille thermoconductrice (224) établissant une connexion fluidique de la conduite de refoulement (120) et de la région interne (220), et la connexion fluidique étant une connexion pour l'agent fluide.

2. Dispositif (210) selon la revendication précédente, **caractérisé en ce que** le composant du système (122) comprend au moins l'un des éléments suivants : un module de refoulement (124) ; un récipient de travail (114) ; une autre conduite de refoulement (120).

3. Dispositif (210) selon l'une quelconque des revendications précédentes, **caractérisé en ce que** la douille thermoconductrice (224) présente une douille cylindrique.

4. Dispositif (210) selon l'une quelconque des revendications précédentes, **caractérisé en ce que** la douille thermoconductrice (224) est réalisée en plusieurs parties.

5. Dispositif (210) selon l'une quelconque des revendications précédentes, **caractérisé en ce que** la douille thermoconductrice (224) fait partie intégrale d'au moins l'un des éléments suivants : le raccord de conduite (214) ; le raccord modulaire (216).

6. Dispositif (210) selon l'une quelconque des revendications précédentes, **caractérisé en ce qu'**au moins l'un des éléments suivants est réalisé sans chauffage propre : le raccord de conduite (214) ; le raccord modulaire (216).

7. Dispositif (210) selon l'une quelconque des revendications précédentes, **caractérisé en ce que** le raccord de conduite (214) et/ou le raccord modulaire (216) sont isolés thermiquement complètement ou partiellement, notamment par gainage complet ou partiel avec un matériau isolant, notamment présentant un matériau ayant une conductibilité thermique inférieure à 0,1 W/(m*K), de préférence inférieure à 0,06 W/(m*K).

8. Dispositif (210) selon l'une quelconque des revendications précédentes, **caractérisé en ce que** la douille thermoconductrice (224) comprend un matériau ayant une conductibilité thermique supérieure à 100 W/(m*K).

9. Dispositif (210) selon l'une quelconque des revendications précédentes, **caractérisé en ce que** la douille thermoconductrice (224) comprend au moins l'un des matériaux suivants : un métal, en particulier un ou plusieurs des métaux suivants : cuivre, aluminium, laiton, zinc, argent, or, magnésium, tungstène ; du graphite ; un plastique thermoconducteur, notamment un plastique chargé de graphite ou de particules métalliques.

10. Système (110) pour doser un agent réducteur fluide (112) dans un système de gaz d'échappement, notamment pour réduire les oxydes d'azote dans un gaz d'échappement, comprenant au moins un récipient de travail (114) pour le stockage d'une quantité de travail de l'agent réducteur fluide (112), au moins un mode de dosage (116) et au moins un dispositif (210) selon l'une quelconque des revendications précédentes.
